# EUROPÄISCHE PATENTSCHRIFT

(11) **EP 3 252 523 B1**
(45) Veröffentlichungstag und Bekanntmachung des Hinweises auf die Patenterteilung: **16.10.2019**
(21) Anmeldenummer: 17173352.0
(22) Anmeldetag: 30.05.2017
(51) Int. Cl.: G02F 1/01, G02F 1/11, G02B 21/00

(54) **VERFAHREN ZUM EINSTELLEN DER INTENSITÄT EINES LICHTSTRAHLS IN EINER OPTISCHEN ANORDNUNG UND ZUGEHÖRIGE OPTISCHE ANORDNUNG**
METHOD FOR ADJUSTING THE INTENSITY OF A LIGHT BEAM IN AN OPTICAL ARRANGEMENT AND ASSOCIATED OPTICAL ARRANGEMENT
PROCÉDÉ DE RÉGLAGE DE L'INTENSITÉ D'UN RAYONNEMENT LUMINEUX DANS UN AGENCEMENT OPTIQUE ET AGENCEMENT OPTIQUE CORRESPONDANT

(30) Priorität: 03.06.2016 LU 93098
(43) Veröffentlichungstag der Anmeldung: 06.12.2017
(73) Patentinhaber: Leica Microsystems CMS GmbH, 35578 Wetzlar (DE)
(72) Erfinder: KREMER, Manuel, 69181 Leimen (DE); KRISHNAMACHARI, Vishnu Vardhan, 64625 Bensheim (DE); GISKE, Arnold, 69207 Sandhausen (DE)

(56) Entgegenhaltungen:
- WO-A1-2015/192967
- US-A- 5 357 097
- US-A1- 2003 161 361
- US-A1- 2010 053 725
- US-A1- 2013 329 270

## Beschreibung

Die Erfindung betrifft ein Verfahren zum Einstellen der Intensität eines Lichtstrahls in einer optischen Anordnung, wobei der Lichtstrahl durch einen akustooptischen Filter, AOTF, geführt und in Abhängigkeit von der Frequenz und/oder der Amplitude der Schallwelle, mit der der AOTF betrieben wird, in seiner Intensität eingestellt wird.

Des Weiteren betrifft die Erfindung eine optische Anordnung, insbesondere zur Durchführung des Verfahrens zum Einstellen der Intensität eines Lichtstrahls, vorzugsweise in einem Mikroskop, wobei der Lichtstrahl durch einen akustooptischen Filter, AOTF, geführt und in Abhängigkeit von der Frequenz und/oder der Amplitude der Schallwelle, mit der der AOTF betrieben wird, in seiner Intensität eingestellt wird.

Verfahren sowie optische Anordnungen, mit denen die Intensität eines Lichtstrahls eingestellt wird, sind aus der Praxis bekannt. Dabei stellt es eine weit verbreitete Möglichkeit dar, hierzu akustooptische Filter - Acousto-Optical Tunable Filter, AOTF - zu verwenden, die beispielsweise die Intensität eines Anregungslichts in Laser-Raster-Mikroskopen variieren.

Hierbei werden akustische Schallwellen - üblicherweise im Radiofrequenzbereich - über einen Transducer in einen optischen Kristall eingeprägt, wobei die Schallwellen eine periodische Modulation des lokalen Brechungsindex des Kristalls erzeugen. Diese Modulation wirkt wie ein optisches Gitter oder Bragg-Gitter und kann Licht entsprechender Wellenlänge beugen. Die schnelle Modulierbarkeit einer derartigen akustischen Welle macht zusammen mit den im Vergleich mit anderen Methoden - beispielsweise mit elektrooptischen Effekten - geringen Kosten akustooptische Filter zum Standardwerkzeug für die Lichtmodulation in beispielsweise Laser-Raster-Mikroskopen. Sehr weit verbreitet sind akustooptische Filter für Laserwellenlängen im sichtbaren Bereich, aber es existieren auch Ausführungen für infrarotes - Mehrphotonenmikroskopie - oder ultraviolettes Licht.

Beispielsweise offenbart das Dokument US 2013/329270 A1 ein Verfahren zum Einstellen der Intensität eines Lichtstrahls in einer optischen Anordnung, wobei der Lichtstrahl durch einen akustooptischen Filter, AOTF, geführt und in Abhängigkeit von der Frequenz und/oder der Amplitude der Schallwelle, mit der der AOTF betrieben wird, in seiner Intensität eingestellt wird.

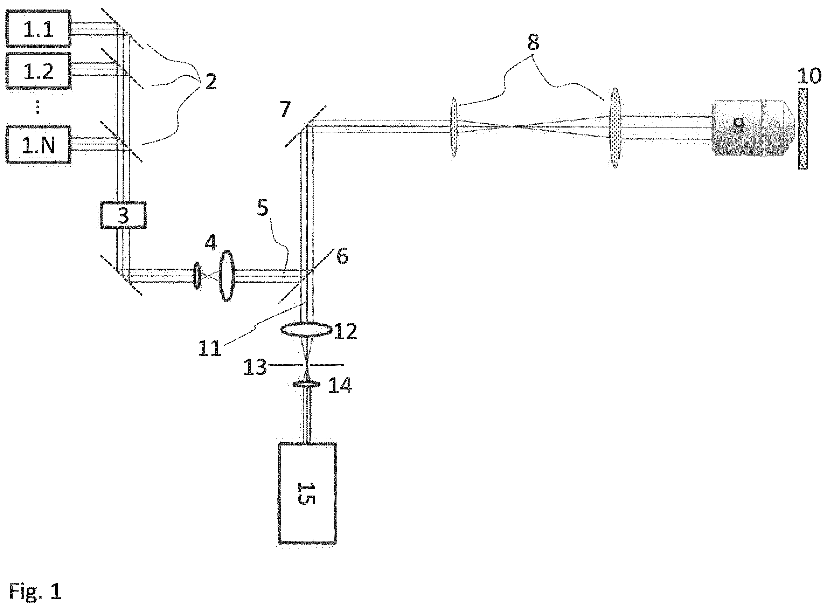

Fig. 1 zeigt eine mögliche Verwendung eines AOTF in einem Laser-Raster-Mikroskop oder in einem konfokalen Laser-Raster-Mikroskop. Die Lichtstrahlen einer Reihe von Lasern 1.1 bis 1.N unterschiedlicher Wellenlänge werden unter Verwendung wellenlängenselektiver optischer Elemente 2, beispielsweise Kanten-, Bandpass- oder Notchfilter, vereinigt und treffen auf einen sich im gemeinsamen Strahlengang befindlichen AOTF 3. Nach dem Durchlaufen einer optionalen Optik 4 zur Anpassung des Strahldurchmessers trifft der Anregungsstrahl 5 auf einen Hauptstrahlteiler 6 des Mikroskops und auf eine Scaneinheit 7. Der Lichtstrahl wird dann mit Hilfe von Feldoptiken 8 von der Scaneinheit 7 in ein Objektiv 9 abgebildet und schließlich auf eine Probe 10 fokussiert. Das dort erzeugte Fluoreszenzlicht im Detektionsstrahlengang 11 trifft nach Durchlaufen des Hauptstrahlteilers 6 auf eine Fokussieroptik 12, eine konfokale Lochblende 13 und eine Kollimationsoptik 14 und wird schließlich im Detektionsmodul 15 nachgewiesen.

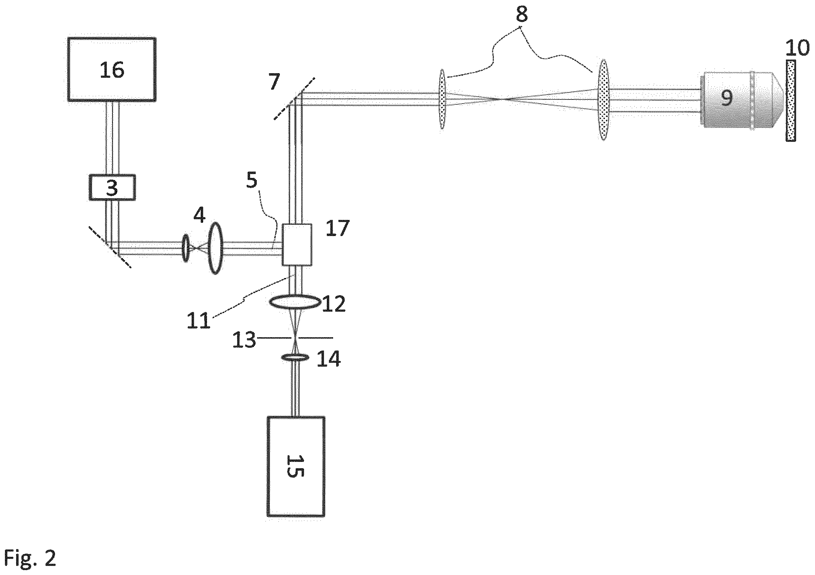

In Fig. 2 ist das gleiche Mikroskop gezeigt, wobei jedoch die einzelnen Laser 1.1 bis 1.N aus Fig. 1 durch einen Superkontinuum-Laser 16 - ein sogenannter Weißlichtlaser, WLL - und der Hauptstrahlteiler 6 aus Fig. 1 durch einen akustooptischen Strahlteiler 17 - Acousto-Optical Beam Splitter, AOBS - ersetzt sind.

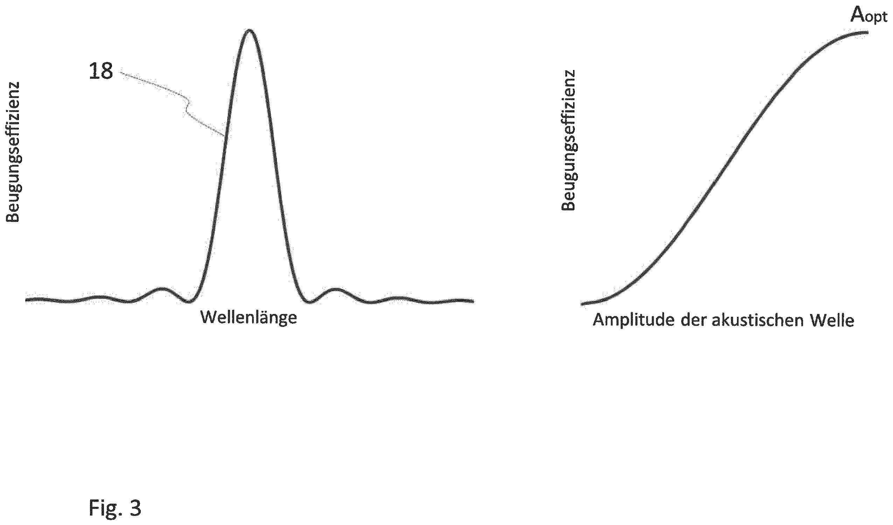

Die für den Betrieb von akustooptischen Filtern, AOTFs, charakteristischen Funktionen sind in Fig. 3 skizziert. In der linken Hälfte der Fig. 3 ist die Beugungseffizienz 18 für eine bestimmte Frequenz der akustischen Welle oder Schallwelle als Funktion der Wellenlänge des in der Intensität einzustellenden Lichts gezeigt, während in der rechten Hälfte der Fig. 3 die Beugungseffizienz als Funktion der Amplitude der akustischen Welle oder Schallwelle skizziert ist. Die Übertragungsfunktion lässt sich für kleine Amplituden in guter Näherung durch einen quadrierten Kardinalsinus beschreiben. Ihre Breite hängt für eine vorgegebene Wellenlänge von Form und Größe des Transducers ab, wobei sie sich typischerweise im Bereich zwischen 0.1 nm - 10 nm bewegt. Die Beugungseffizienz in Abhängigkeit von der Amplitude der akustischen Welle oder Schallwelle nimmt nach Erreichen des Optimums - bei einer Amplitude Aₒₚₜ - wieder ab und würde bei 2Aₒₚₜ ein Minimum aufweisen. Wenn AOTFs als reine Modulatoren für die Lichtintensität eingesetzt werden, existiert in der Mikroskopie üblicherweise in der Steuersoftware ein Stellelement, mit dem die akustische Amplitude zwischen Null und Aₒₚₜ eingestellt werden kann, also in dem Bereich, der in Fig. 3 gezeigt ist. Optional kann die gezeigte Kurve rechnerisch linearisiert werden, so dass eine Verdoppelung des eingestellten Werts auch zu einer Verdoppelung der Intensität eines Lichtstrahls führt.

Bei verschiedenen Anwendungen ist es wünschenswert, dass zumindest für einzelne Wellenlängen eines Weißlichtlasers höhere Beleuchtungsintensitäten als bislang üblich, beispielsweise für Bleichexperimente, zur Verfügung stehen.

Des Weiteren führt ein mögliches Ersetzen der herkömmlich für die Fluoreszenzanregung verwendeten Gaslaser, beispielsweise Helium-Neon- oder Argonlaser, und diodengepumpten Festkörperlaser durch kostengünstigere Diodenlaser aufgrund deren relativ breiten Laserspektren - einige Nanometer - zu hohen Verlusten in der Beugungseffizienz und somit zu einer relativ geringen zur Verfügung stehenden Lichtleistung. Eine einfach zu realisierende Erhöhung der Bandbreite der entsprechenden akustooptischen Elemente wäre diesbezüglich für die Fluoreszenzmikroskopie wertvoll, um letztendlich eine höhere Lichtleistung zu realisieren.

Der vorliegenden Erfindung liegt daher die Aufgabe zugrunde, ein Verfahren und eine optische Anordnung der eingangs genannten Art derart auszugestalten und weiterzubilden, dass eine besonders hohe Lichtleistung auf einfache Weise erzielbar ist.

Erfindungsgemäß wird die voranstehende Aufgabe durch ein Verfahren mit den Merkmalen des Anspruchs 1 sowie durch eine optische Anordnung mit den Merkmalen des Anspruchs 8 gelöst.

Danach ist gemäß Anspruch 1 das Verfahren derart ausgestaltet und weitergebildet, dass die Amplitude der Schallwelle bei vorgegebener Frequenz der Schallwelle größer gewählt wird, als sie für das Erreichen eines ersten Maximums einer Beugungseffizienz für eine vorgegebene Wellenlänge oder für ein vorgegebenes Wellenlängenspektrum des Lichtstrahls zu wählen ist, und dass die Amplitude der Schallwelle zusätzlich derart gewählt wird, dass ein Wert eines Integrals eines Produkts aus Übertragungsfunktion des AOTF und Wellenlängenspektrum des Lichtstrahls größer ist als bei der für das Erreichen des ersten Maximums zu wählenden Größe der Amplitude.

Des Weiteren ist eine optische Anordnung gemäß Anspruch 8 derart ausgestaltet und weitergebildet, dass die Amplitude der Schallwelle bei vorgegebener Frequenz der Schallwelle größer gewählt ist, als sie für das Erreichen eines ersten Maximums einer Beugungseffizienz für eine vorgegebene Wellenlänge oder für ein vorgegebenes Wellenlängenspektrum des Lichtstrahls zu wählen ist, und dass die Amplitude der Schallwelle zusätzlich derart gewählt ist, dass ein Wert eines Integrals eines Produkts aus Übertragungsfunktion des AOTF und Wellenlängenspektrum des Lichtstrahls größer ist als bei der für das Erreichen des ersten Maximums zu wählenden Größe der Amplitude.

In erfindungsgemäßer Weise ist zunächst erkannt worden, dass ein üblicher AOTF hinsichtlich seiner Betriebsweise nicht auf die übliche Praxis eingeschränkt ist. In weiter erfindungsgemäßer Weise ist dann erkannt worden, dass durch eine geschickte alternative Betriebsweise eines AOTF die voranstehende Aufgabe auf überraschend einfache Weise gelöst wird. Hierzu wird zunächst die Amplitude der Schallwelle bei vorgegebener Frequenz der Schallwelle größer gewählt, als diese Amplitude für das Erreichen eines ersten Maximums einer Beugungseffizienz für eine vorgegebene Wellenlänge oder für ein vorgegebenes Wellenlängenspektrum des Lichtstrahls zu wählen ist. Man wählt die Amplitude also über eine für das Erreichen eines ersten Maximums einer Beugungseffizienz erforderliche Amplitude hinaus. Dies führt üblicherweise zunächst zu einer Reduktion der Beugungseffizienz. Als weitere Randbedingung ist die Amplitude der Schallwelle zusätzlich derart zu wählen, dass ein Wert eines Integrals eines Produkts aus Übertragungsfunktion des AOTF und Wellenlängenspektrum des Lichtstrahls größer ist als bei der für das Erreichen des ersten Maximums zu wählenden Größe der Amplitude. Dies heißt, dass die Amplitude nicht nur einfach größer gewählt wird, als diese Amplitude für das Erreichen eines ersten Maximums einer Beugungseffizienz für eine vorgegebene Wellenlänge oder für ein vorgegebenes Wellenlängenspektrum des Lichtstrahls zu wählen wäre. Dies könnte dazu führen, dass die Beugungseffizienz lediglich unterhalb des ersten Maximums liegt. Es ist jedoch in erfindungsgemäßer Weise erkannt worden, dass durch eine weitere Erhöhung der Amplitude die Beugungseffizienz nach einem anfänglichen Sinken wieder ansteigt, und zwar über den Wert der Beugungseffizienz beim ersten Maximum hinaus. Eine dabei einhergehende mögliche Verbreiterung des Peaks der Übertragungsfunktion spielt bei spektral breitbandigen Lichtstrahlen dann eine entscheidende Rolle, da die insgesamt erreichbare Lichtintensität vom Integral des Produkts aus Übertragungsfunktion des AOTF und Wellenlängenspektrum des Lichtstahls abhängt. Ist dieses Integral größer als bei der zum Erreichen des ersten Maximums der Beugungseffizienz erforderlichen Amplitude, so ergibt sich eine insgesamt höhere Lichtintensität. Dabei ist zu berücksichtigen, dass bei vielen Anwendungen die dabei entstehende größere spektrale Breite des Lichtstrahls von üblicherweise nur einigen Nanometern aufgrund der typischerweise breitbandigen Absorptionsspektren der eingesetzten Farbstoffe letztendlich keine praktische Rolle spielt, insbesondere, wenn beispielsweise lediglich eine Bleichwirkung vergrößert werden soll.

Folglich sind mit dem erfindungsgemäßen Verfahren und der erfindungsgemäßen optischen Anordnung ein Verfahren und eine optische Anordnung der eingangs genannten Art angegeben, mit denen eine besonders hohe Lichtleistung auf einfache Weise erzielbar ist.

Im Hinblick auf eine besonders wirksame Erhöhung der Lichtleistung kann die den Lichtstrahl erzeugende Lichtquelle oder können die den Lichtstrahl erzeugenden Lichtquellen derart gewählt oder eingestellt werden, dass das Wellenlängenspektrum des erzeugten Lichtstrahls breiter ist als oder gleich breit ist wie die Breite der wellenlängenabhängigen Übertragungsfunktion des AOTF. Mit anderen Worten ist der Wert des Integrals des Produkts aus Übertragungsfunktion des AOTF und Wellenlängenspektrum des Lichtstahls dann besonders sicher durch eine Vergrößerung der Amplitude der Schallwelle vergrößerbar, wenn das Wellenlängenspektrum des Lichtstrahls eine relativ zur Breite der Übertragungsfunktion des AOTF größere Breite aufweist.

Bei einer konkreten Ausführungsform kann die Amplitude mehr als doppelt so groß gewählt werden, wie die für das Erreichen des ersten Maximums zu wählende Amplitude. In diesem Fall nimmt die Beugungseffizienz für eine vorgegebene Wellenlänge oder für ein vorgegebenes Wellenlängenspektrum des Lichtstrahls - bei weiterer Vergrößerung der Amplitude - über den Wert des ersten Maximums hinaus zu.

Im Hinblick auf einen besonders sicheren Betrieb des AOTF kann die Amplitude kleiner oder gleich der dreifachen Amplitude gewählt werden, die für das Erreichen des ersten Maximums zu wählen ist. Grundsätzlich kann die Amplitude auch größer gewählt werden, jedoch ist die Erhöhung der Amplitude grundsätzlich durch die mechanische Stabilität des AOTF und/oder eventuell auftretende unerwünschte Nichtlinearitäten im Kristall, im Transducer oder im elektronischen Treiber des AOTF begrenzt. Bei einer zu groß gewählten Amplitude könnte der AOTF beschädigt werden.

Bei einem weiteren konkreten Ausführungsbeispiel kann der Lichtstrahl eine vorgebbare Wellenlängen-Bandbreite aufweisen. Hierbei ist auf den jeweiligen Anwendungsfall abzustellen.

Hinsichtlich eines besonders sicheren und einfachen Verfahrens kann der Lichtstrahl mittels eines Weißlichtlasers oder mittels eines oder mehrerer Diodenlaser bereitgestellt werden. Auch hierbei ist auf den jeweiligen Anwendungsfall abzustellen und kann die für den individuellen Anwendungsfall günstigste Variante gewählt werden.

Insbesondere bei der Verwendung mehrerer Einzellaser zur Erzeugung des Lichtstrahls kann der Lichtstrahl als vereinigter Lichtstrahl bereitgestellt werden.

Bei einer besonders vorteilhaften Ausführungsform der optischen Anordnung und bei einer Integration der optischen Anordnung in ein Mikroskop kann in einem Detektionsstrahlengang ein Notchfilter zur Blockierung eines Anregungslichts angeordnet sein. Eine derartige Ausgestaltung bietet sich insbesondere bei der Verwendung eines Weißlichtlasers als die den Lichtstrahl erzeugende Lichtquelle an, sofern man sich auf einige ausgewählte Wellenlängen des Weißlichtlasers beschränkt, für die die erhöhte Lichtintensität gewünscht wird.

Bei einer weiteren vorteilhaften Ausführung der optischen Anordnung und bei deren Integration in ein Mikroskop und bei Ausführung eines akustooptischen Strahlteilers, AOBS, der optischen Anordnung in einer Zwei-Kristall-Anordnung kann ein zweiter Kristall des AOBS zur Beugung von von einer Probe reflektiertem Anregungslicht aus einem Detektionsstrahlengang analog zum AOTF mit entsprechend größer gewählter Amplitude betreibbar sein. Ein reflektiertes Anregungslicht wird somit sicher aus dem Detektionsstrahlengang herausgebeugt.

Zusammenfassend darf festgehalten werden, dass bei dem erfindungsgemäßen Verfahren und der erfindungsgemäßen optischen Anordnung Nichtlinearitäten im Verhalten eines AOTF hinsichtlich des funktionalen Zusammenhangs von gewählter Frequenz und/oder Amplitude der auf den AOTF wirkenden Schallwelle, der Wellenlänge des zu beeinflussenden Lichtstrahls und einer sich ergebenden Beugungseffizienz ausgenutzt werden, um die Intensität und Breite des nach Durchlaufen des AOTF resultierenden Lichtstrahls zu erhöhen.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine optische Anordnung mit einem AOTF zum Einstellen der Intensität eines Lichtstrahls,
- Fig. 2: in einer schematischen Darstellung eine weitere optische Anordnung mit einem AOTF zum Einstellen der Intensität eines Lichtstrahls,
- Fig. 3: in zwei Diagrammen die für den Betrieb eines AOTF charakteristischen Funktionen,
- Fig. 4: in drei Diagrammen die Beugungseffizienz in Abhängigkeit von der Wellenlänge bei unterschiedlichen Amplituden sowie die Lichtintensität in Abhängigkeit von der Amplitude einer Schallwelle,
- Fig. 5: in einer schematischen Darstellung eine optische Anordnung in Form eines Mikroskops mit einem zusätzlichen Notchfilter gemäß einem Ausführungsbeispiel der Erfindung,
- Fig. 6: einen Teilbereich einer optischen Anordnung in einem Probenbereich gemäß einem weiteren Ausführungsbeispiel der Erfindung und
- Fig. 7: in einer schematischen Darstellung zwei mögliche Betriebsmodi mit einer entsprechenden Ansteuerung gemäß einem Ausführungsbeispiel der Erfindung.

Im Rahmen der vorliegenden Erfindung wurde erkannt, dass die in Fig. 3 skizzierte übliche Betriebsart eines AOTF im Hinblick auf das Erreichen einer höheren Lichtintensität optimiert werden kann. Somit wird in der vorliegenden Erfindung ein neuer Betriebsmodus - Enhanced-Power-Modus - beschrieben, der eine Erhöhung der Beleuchtungsintensitäten ohne eine konstruktive Änderung am AOTF oder an den in den Fig. 1 und 2 skizzierten Aufbauten und Strahlengängen erlaubt.

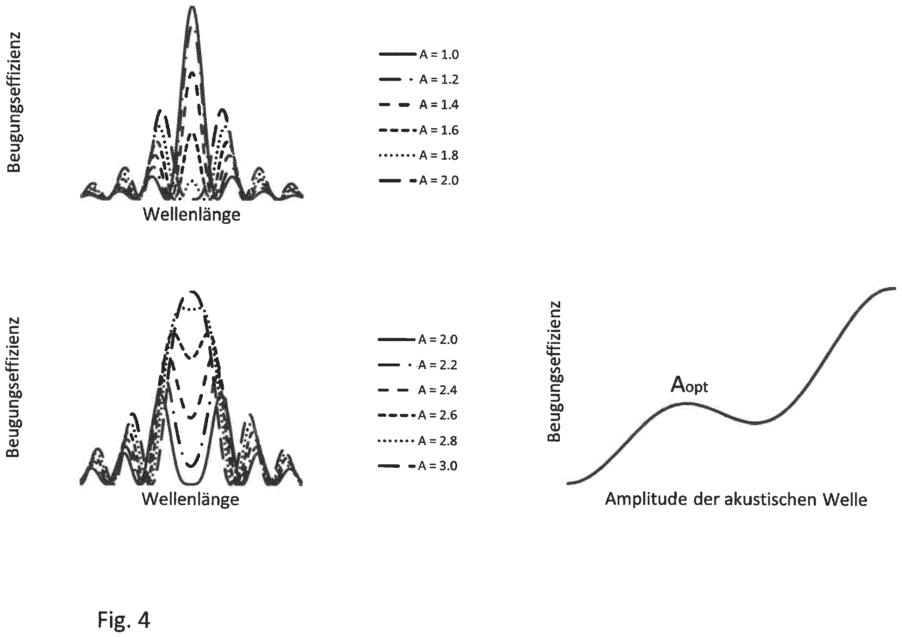

Wird ein AOTF benutzt, um die Intensität spektral schmalbandiger Laser - in der Fluoreszenzmikroskopie typischerweise Helium-Neon-, Argon- oder diodengepumpte Festkörperlaser - zu variieren, spielt die genaue Form der wellenlängenabhängigen Übertragungsfunktion des AOTF - siehe Fig. 3 - praktisch keine Rolle, sondern es kommt lediglich auf die maximale Beugungseffizienz an. Daher wird die Amplitude der akustischen Welle oder Schallwelle üblicherweise nur zwischen Null und Aₒₚₜ variiert. Betrachtet man jedoch die Übertragungsfunktion des AOTF für Amplituden, die über Aₒₚₜ liegen, so stellt man fest, dass zunächst die Seitenbänder der Übertragungsfunktion anwachsen und das mittlere Maximum sinkt. Bei einer Amplitude von 2Aₒₚₜ ist dieses Maximum auf Null gesunken und steigt für größer werdende Amplituden wieder an. In Fig. 4 ist dieses Verhalten auf der linken Seite skizziert. Der Übersichtlichkeit halber sind die Kurven für Amplituden A zwischen Aₒₚₜ und 3Aₒₚₜ in zwei Diagrammen dargestellt. Neben dem schon erwähnten Verhalten des mittleren Maximums lässt sich auch eine Verbreiterung dieses Maximums oder Peaks mit größer werdender Amplitude feststellen. Für spektral breitbandige Laser spielt für die gesamte Beugungseffizienz nicht nur der Wert des Maximums, sondern auch das Integral - genauer gesagt das Integral des Produktes aus Übertragungsfunktion und Laserspektrum oder Lichtstrahlspektrum - unter den in Fig. 4 auf der linken Seite gezeigten Kurven eine Rolle. Die sich daraus ergebene Lichtintensität ist auf der rechten Seite von Fig. 4 (ebenfalls als "Beugungseffizienz" bezeichnet) in Abhängigkeit von der Amplitude für den Fall gezeigt, bei dem das Laserspektrum deutlich breiter als die Übertragungsfunktion des AOTF ist. Hierbei entsteht das erste Maximum bei einer Amplitude von Aₒₚₜ und das zweite Maximum bei 3Aₒₚₜ. Die Lichtintensität in der ersten Beugungsordnung des AOTF kann auf diese Art um mehr als einen Faktor zwei erhöht werden. Für die breiten Anregungsspektren der in der Fluoreszenzmikroskopie verwendeten Farbstoffe spielt die dabei entstehende größere spektrale Breite des Anregungslichts - einige Nanometer - keine praktische Rolle.

Für den praktischen Gebrauch dieses erfindungsgemäßen neuen Betriebsmodus in Verbindung mit einem Laser-Raster-Mikroskop gilt es in diesem Zusammenhang zwei wesentliche Bedingungen zu erfüllen:
1. Die Einkoppeleffizienz des Hauptstrahlteilers 6 gemäß Fig. 1 oder eines AOBS 17 gemäß Fig. 2 muss hinreichend hoch sein.
2. Die Unterdrückung von reflektiertem Anregungslicht an optischen Elementen und/oder der zu untersuchenden Probe 10 darf nicht beeinträchtigt werden.

Zu 1.: Bei Verwendung von Notch- oder Kantenfiltern stellt die leicht vergrößerte spektrale Breite des Anregungslichts für typische Ausführungen kein Problem dar, da die Bandbreite solcher Filter immer noch deutlich größer ist als die Bandbreite des vom AOTF gebeugten Laserlichts. Falls ein AOBS als Strahlteiler genutzt wird, so ist dieser AOBS per Design so ausgeführt, dass seine Übertragungsfunktion eine größere Bandbreite - typischerweise etwa um einen Faktor zwei - aufweist als der vorgeschaltete AOTF. Durch das breitere Anregungsspektrum verringert sich die Beugungseffizienz des AOBS, wobei jedoch einfache Überlegungen analog zu den weiter oben genannten Überlegungen zeigen, dass auch trotz der niedrigeren Effizienz noch 60 - 70% mehr Anregungslicht auf der Probe ankommen als im normalen Betriebsmodus mit einer maximalen Amplitude von Aₒₚₜ.

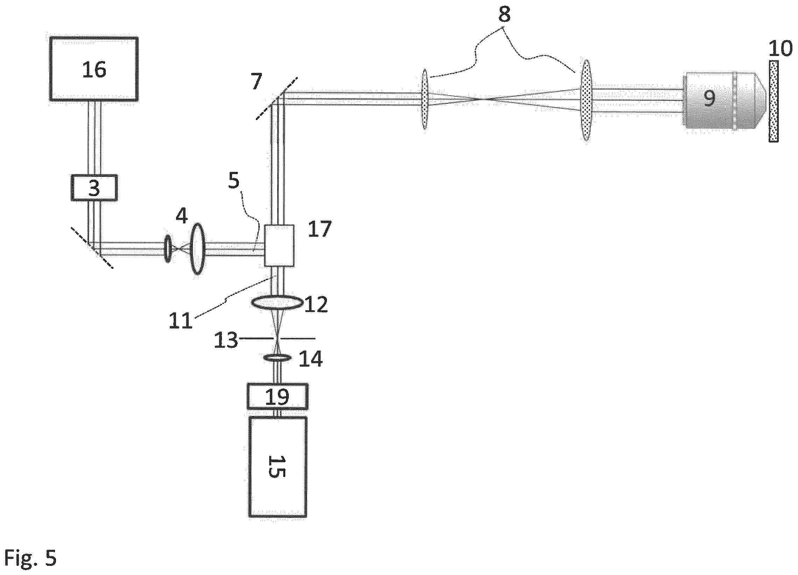

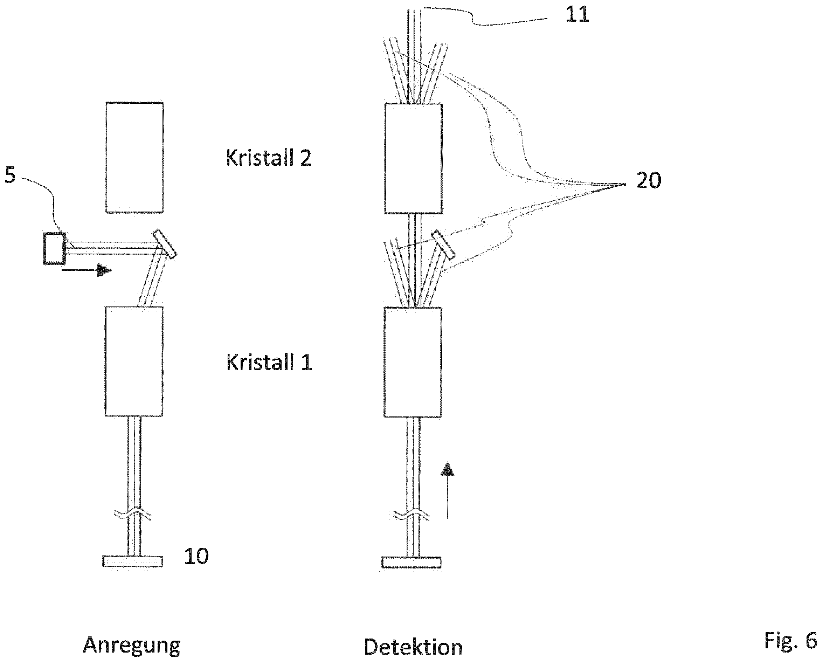

Zu 2.: Die Unterdrückung des Anregungslichts stellt bei filterbasierten Konfigurationen aus den gleichen Gründen wie in Punkt 1 kein Problem dar. Im Falle eines AOBS verschlechtert sich die Reflexionsunterdrückung abhängig von den gewählten AOTF- und AOBS-Designs. Da die Unterdrückung des Anregungslichts darüber hinaus auch noch stark von den verwendeten Detektoren und insbesondere von deren Anordnung abhängt, kann kein allgemeines Kriterium angegeben werden, bis zu welchem Punkt die Unterdrückung akzeptabel ist. Vielmehr muss applikativ entschieden werden, ob die verringerte Reflexionsunterdrückung akzeptabel ist. An dieser Stelle werden zwei Möglichkeiten anhand von Ausführungsbeispielen kurz skizziert, wie die Unterdrückung noch verbessert werden kann:
- Bei der einen Möglichkeit kann ein Notchfilter oder können mehrere Notchfilter im Detektionsstrahlengang angeordnet werden. Beschränkt man sich im Fall eines Weißlichtlasers auf einige ausgewählte Wellenlängen, für die der Enhanced-Power-Modus zugelassen wird, so kann in den Detektionsstrahlengang ein zusätzlicher Notchfilter eingebracht werden, um das Anregungslicht zu blocken. Fig. 5 zeigt ein derartiges mögliches Ausführungsbeispiel, wobei die genaue Position des Notchfilters 19 im Strahlengang 11 keine Rolle spielt.
- Wird der AOBS gemäß einer zweiten Möglichkeit und einem weiteren Ausführungsbeispiel in einer Zwei-Kristall-Anordnung ausgeführt, so kann der Kristall 2 ebenso wie der AOTF im Enhanced-Power-Modus, d.h. mit vergrößerter Amplitude, betrieben werden. Dies sorgt nochmals für eine stärkere Unterdrückung des Anregungslichts. Fig. 6 zeigt eine derartige Anordnung im Rahmen eines weiteren Ausführungsbeispiels. Das Anregungslicht 5 wird vom ersten AOBS-Kristall im normalen Betriebsmodus zur Probe gelenkt. Das reflektierte Anregungslicht 20 wird vom Kristall 1 - im normalen Betriebsmodus - und Kristall 2 - im Enhanced-Power-Modus - aus dem Detektionsstrahlengang 11 gebeugt.

Die verschiedenen Beugungsrichtungen des reflektierten Anregungslichts 20 resultieren aus unterschiedlichen Polarisationen des Lichts.

Benutzt man den Enhanced-Power-Modus gemäß dem erfindungsgemäßen Verfahren nur für Bleichexperimente, so spielt die Reflexionsunterdrückung nur eine untergeordnete Rolle, da während des Bleichens üblicherweise nicht detektiert wird und man für die auf das Bleichen folgende Messung wieder in den normalen Betriebsmodus zurückschalten kann.

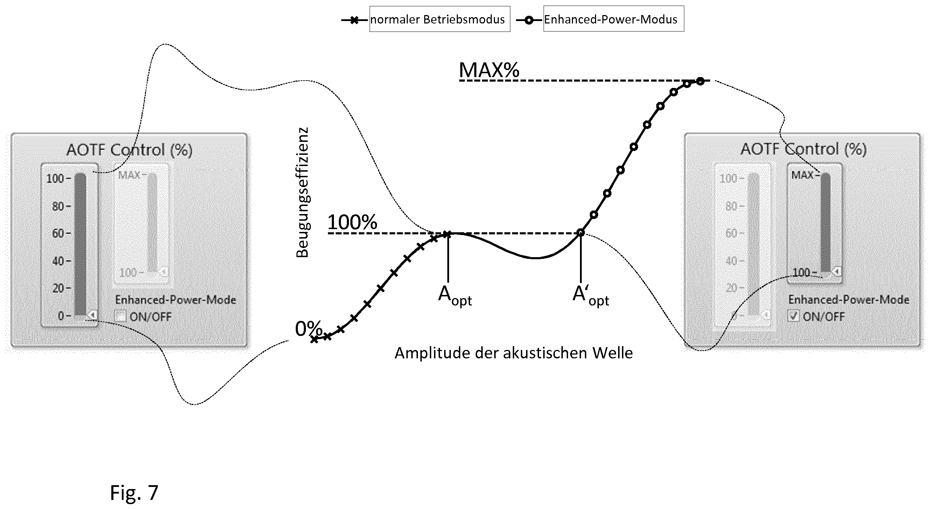

Fig. 7 stellt die beiden möglichen Betriebsmodi sowie eine mögliche vorteilhafte Implementierung der Ansteuerung dar. Im normalen Betriebsmodus wird die akustisehe Amplitude beziehungsweise Amplitude der Schallwelle mit einem Stellelement zwischen Null und Aₒₚₜ variiert. Hierdurch wird die Lichtintensität zwischen 0 und 100% variiert. Beim Einschalten des Enhanced-Power-Modus kann über ein zweites Stellelement die Amplitude zwischen A'ₒₚₜ und dem Maximalwert verstellt werden und somit die Lichtintensität zwischen 100% und der maximalen erreichbaren Prozentzahl MAX an Licht variiert werden. Beide Stellelemente können - gegebenenfalls über unterschiedliche mathematische Funktionen - linearisiert werden.

Hinsichtlich weiterer vorteilhafter Ausgestaltungen des erfindungsgemäßen Verfahrens sowie der erfindungsgemäßen optischen Anordnung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1.1 bis 1.N: Laser
- 2: Optisches Element
- 3: AOTF
- 4: Optik
- 5: Anregungsstrahl
- 6: Hauptstrahlteiler
- 7: Scaneinheit
- 8: Feldoptik
- 9: Objektiv
- 10: Probe
- 11: Detektionsstrahlengang
- 12: Fokussieroptik
- 13: Lochblende
- 14: Kollimationsoptik
- 15: Detektionsmodul
- 16: Laser
- 17: AOBS
- 18: Beugungseffizienz
- 19: Notchfilter
- 20: Anregungslicht

## Patentansprüche

1. Verfahren zum Einstellen der Intensität eines Lichtstrahls in einer optischen Anordnung, wobei der Lichtstrahl durch einen akustooptischen Filter, AOTF (3), geführt und in Abhängigkeit von der Frequenz und/oder der Amplitude der Schallwelle, mit der der AOTF (3) betrieben wird, in seiner Intensität eingestellt wird,
**dadurch gekennzeichnet, dass** die Amplitude der Schallwelle bei vorgegebener Frequenz der Schallwelle größer gewählt wird, als sie für das Erreichen eines ersten Maximums einer Beugungseffizienz (18) für eine vorgegebene Wellenlänge oder für ein vorgegebenes Wellenlängenspektrum des Lichtstrahls zu wählen ist, und dass die Amplitude der Schallwelle zusätzlich derart gewählt wird, dass ein Wert eines Integrals eines Produkts aus Übertragungsfunktion des AOTF (3) und Wellenlängenspektrum des Lichtstrahls größer ist als bei der für das Erreichen des ersten Maximums zu wählenden Größe der Amplitude.

2. Verfahren nach Anspruch 1, **dadurch gekennzeichnet, dass** die den Lichtstrahl erzeugende Lichtquelle (16) oder erzeugenden Lichtquellen (1.1-1.N) derart gewählt oder eingestellt wird oder werden, dass das Wellenlängenspektrum des erzeugten Lichtstrahls breiter ist als oder gleich breit ist wie die Breite der wellenlängenabhängigen Übertragungsfunktion des AOTF (3).

3. Verfahren nach Anspruch 1 oder 2, **dadurch gekennzeichnet, dass** die Amplitude mehr als doppelt so groß gewählt wird, wie die für das Erreichen des ersten Maximums zu wählende Amplitude.

4. Verfahren nach einem der Ansprüche 1 bis 3, **dadurch gekennzeichnet, dass** die Amplitude kleiner oder gleich der dreifachen Amplitude gewählt wird, die für das Erreichen des ersten Maximums zu wählen ist.

5. Verfahren nach einem der Ansprüche 1 bis 4, **dadurch gekennzeichnet, dass** der Lichtstrahl eine vorgebbare Wellenlängen-Bandbreite aufweist.

6. Verfahren nach einem der Ansprüche 1 bis 5, **dadurch gekennzeichnet, dass** der Lichtstrahl mittels eines Weißlichtlasers (16) oder Diodenlasers (16) bereitgestellt wird.

7. Verfahren nach einem der Ansprüche 1 bis 5, **dadurch gekennzeichnet, dass** der Lichtstrahl als vereinigter Lichtstrahl mittels mehrerer Einzellaser (1.1-1.N) bereitgestellt wird.

8. Optische Anordnung, insbesondere zur Durchführung des Verfahrens zum Einstellen der Intensität eines Lichtstrahls nach einem der Ansprüche 1 bis 7, vorzugsweise in einem Mikroskop, wobei der Lichtstrahl durch einen akustooptischen Filter, AOTF (3), geführt und in Abhängigkeit von der Frequenz und/oder der Amplitude der Schallwelle, mit der der AOTF (3) betrieben wird, in seiner Intensität eingestellt wird,
**dadurch gekennzeichnet, dass** die Amplitude der Schallwelle bei vorgegebener Frequenz der Schallwelle größer gewählt ist, als sie für das Erreichen eines ersten Maximums einer Beugungseffizienz (18) für eine vorgegebene Wellenlänge oder für ein vorgegebenes Wellenlängenspektrum des Lichtstrahls zu wählen ist, und dass die Amplitude der Schallwelle zusätzlich derart gewählt ist, dass ein Wert eines Integrals eines Produkts aus Übertragungsfunktion des AOTF (3) und Wellenlängenspektrum des Lichtstrahls größer ist als bei der für das Erreichen des ersten Maximums zu wählenden Größe der Amplitude.

9. Optische Anordnung nach Anspruch 8, **dadurch gekennzeichnet, dass** - bei einer Integration der optischen Anordnung in ein Mikroskop - in einem Detektionsstrahlengang ein Notchfilter (19) zur Blockierung eines Anregungslichts angeordnet ist.

10. Optische Anordnung nach Anspruch 8 oder 9, **dadurch gekennzeichnet, dass** - bei einer Integration der optischen Anordnung in ein Mikroskop und bei Ausführung eines akustooptischen Strahlteilers, AOBS (17), der optischen Anordnung in einer Zwei-Kristall-Anordnung - ein zweiter Kristall des AOBS (17) zur Beugung von einer Probe (10) reflektiertem Anregungslicht (20) aus einem Detektionsstrahlengang (11) analog zum AOTF (3) mit entsprechend größer gewählter Amplitude betreibbar ist.

## Claims

1. Method for setting the intensity of a light beam in an optical arrangement, wherein the light beam is guided through an acousto-optic filter, AOTF (3), and is set in its intensity in dependence on the frequency and/or the amplitude of the sound wave with which the AOTF (3) is operated,
**characterized in that** the amplitude of the sound wave at a specified frequency of the sound wave is selected to be greater than should be selected for reaching a first maximum of a diffraction efficiency (18) for a specified wavelength or for a specified wavelength spectrum of the light beam, and **in that** the amplitude of the sound wave is additionally selected such that a value of an integral of a product of the transfer function of the AOTF (3) and the wavelength spectrum of the light beam is greater than in the case of the size of the amplitude that should be selected for reaching the first maximum.

2. Method according to Claim 1, **characterized in that** the light source (16) or light sources (1.1-1.N) producing the light beam is or are selected or set such that the wavelength spectrum of the light beam produced is wider than or as wide as the width of the wavelength-dependent transfer function of the AOTF (3).

3. Method according to Claim 1 or 2, **characterized in that** the amplitude is selected to be more than twice as large as the amplitude that should be selected for reaching the first maximum.

4. Method according to one of Claims 1 to 3, **characterized in that** the amplitude is smaller than or the same as three times the amplitude that should be selected for reaching the first maximum.

5. Method according to one of Claims 1 to 4, **characterized in that** the light beam has a specifiable wavelength bandwidth.

6. Method according to one of Claims 1 to 5, **characterized in that** the light beam is provided using a white light laser (16) or diode laser (16).

7. Method according to one of Claims 1 to 5, **characterized in that** the light beam is provided as a combined light beam using a plurality of individual lasers (1.1-1.N).

8. Optical arrangement, in particular for performing the method for setting the intensity of a light beam according to one of Claims 1 to 7, preferably in a microscope, wherein the light beam is guided through an acousto-optic filter, AOTF (3), and is set in its intensity in dependence on the frequency and/or the amplitude of the sound wave with which the AOTF (3) is operated,
**characterized in that** the amplitude of the sound wave at a specified frequency of the sound wave is selected to be greater than should be selected for reaching a first maximum of a diffraction efficiency (18) for a specified wavelength or for a specified wavelength spectrum of the light beam, and **in that** the amplitude of the sound wave is additionally selected such that a value of an integral of a product of the transfer function of the AOTF (3) and the wavelength spectrum of the light beam is greater than in the case of the size of the amplitude that should be selected for reaching the first maximum.

9. Optical arrangement according to Claim 8, **characterized in that** - in the case of an integration of the optical arrangement in a microscope - a notch filter (19) for blocking excitation light is arranged in a detection beam path.

10. Optical arrangement according to Claim 8 or 9, **characterized in that** - in the case of an integration of the optical arrangement in a microscope and in the case of an embodiment of an acousto-optical beam splitter, AOBS (17), of the optical arrangement in a two-crystal arrangement - a second crystal of the AOBS (17) is operable for diffracting the excitation light (20) that is reflected by a sample (10) out of a detection beam path (11) analogously to the AOTF (3) with an amplitude that is selected to be correspondingly larger.

## Revendications

1. Procédé de réglage de l'intensité d'un rayon lumineux dans un arrangement optique, le rayon lumineux étant guidé à travers un filtre acousto-optique, AOTF (3), et son intensité étant réglée en fonction de la fréquence et/ou de l'amplitude de l'onde sonore à laquelle fonctionne l'AOTF (3),
**caractérisé en ce que** l'amplitude de l'onde sonore, à une fréquence prédéfinie de l'onde sonore, est choisie plus grande qu'elle devrait être choisie pour atteindre un premier maximum d'une efficacité de diffraction (18) pour une longueur d'onde prédéfinie ou pour un spectre de longueurs d'onde prédéfini du rayon lumineux, et **en ce que** l'amplitude de l'onde sonore est en plus choisie de telle sorte qu'une valeur d'une intégrale d'un produit de la fonction de transfert de l'AOTF (3) par le spectre de longueurs d'onde du rayon lumineux est supérieure qu'avec la grandeur de l'amplitude à choisir pour atteindre le premier maximum.

2. Procédé selon la revendication 1, **caractérisé en ce que** la source de lumière (16) qui génère le rayon lumineux ou les sources de lumière (1.1 - 1.N) qui génèrent le rayon lumineux sont choisies ou réglées de telle sorte que le spectre de longueurs d'onde du rayon lumineux généré est plus large ou de même largeur que la largeur de la fonction de transfert dépendante de la longueur d'onde de l'AOTF (3).

3. Procédé selon la revendication 1 ou 2, **caractérisé en ce que** l'amplitude est choisie de manière à être plus de deux fois plus grande que l'amplitude à choisir pour atteindre le premier maximum.

4. Procédé selon l'une des revendications 1 à 3, **caractérisé en ce que** l'amplitude est choisie inférieure ou égale au triple de l'amplitude qui est à choisir pour atteindre le premier maximum.

5. Procédé selon l'une des revendications 1 à 4, **caractérisé en ce que** le rayon lumineux possède une largeur de bande de longueurs d'onde pouvant être prédéfinie.

6. Procédé selon l'une des revendications 1 à 5, **caractérisé en ce que** le rayon lumineux est fourni par un laser à lumière blanche (16) ou un laser à diode (16).

7. Procédé selon l'une des revendications 1 à 5, **caractérisé en ce que** le rayon lumineux est fourni sous la forme d'un rayon lumineux concentré au moyen de plusieurs lasers (1.1 - 1.N) individuels.

8. Arrangement optique, notamment pour mettre en oeuvre le procédé de réglage de l'intensité d'un rayon lumineux selon l'une des revendications 1 à 7, de préférence dans un microscope, le rayon lumineux étant guidé à travers un filtre acousto-optique, AOTF (3), et son intensité étant réglée en fonction de la fréquence et/ou de l'amplitude de l'onde sonore à laquelle fonctionne l'AOTF (3), **caractérisé en ce que** l'amplitude de l'onde sonore, à une fréquence prédéfinie de l'onde sonore, est choisie plus grande qu'elle devrait être choisie pour atteindre un premier maximum d'une efficacité de diffraction (18) pour une longueur d'onde prédéfinie ou pour un spectre de longueurs d'onde prédéfini du rayon lumineux, et **en ce que** l'amplitude de l'onde sonore est en plus choisie de telle sorte qu'une valeur d'une intégrale d'un produit de la fonction de transfert de l'AOTF (3) par le spectre de longueurs d'onde du rayon lumineux est supérieure qu'avec la grandeur de l'amplitude à choisir pour atteindre le premier maximum.

9. Arrangement optique selon la revendication 8, **caractérisé en ce que** lors d'une intégration de l'arrangement optique dans un microscope, un filtre de Notch (19) destiné à bloquer une lumière d'excitation est disposé dans un trajet de rayon de détection.

10. Arrangement optique selon la revendication 8 ou 9, **caractérisé en ce que** lors d'une intégration de l'arrangement optique dans un microscope et lors de la réalisation d'un diviseur de faisceaux acousto-optique, AOBS (17), de l'arrangement optique dans un arrangement à deux cristaux, un deuxième cristal de l'AOBS (17) peut être utilisé pour la diffraction d'une lumière d'excitation (20) réfléchie par un échantillon (10) hors d'un trajet de rayon de détection (11) de manière similaire à l'AOTF (3) avec une amplitude choisie de manière à être plus grande en conséquence.
